Europäisches Patentamt

European Patent Office

Office européen des brevets

(19)

(11) EP 0 660 502 B1

(12) **FASCICULE DE BREVET EUROPEEN**

(45) Date de publication et mention
de la délivrance du brevet:
**03.11.1999 Bulletin 1999/44**

(51) Int Cl.⁶: **H02P 15/00**

(21) Numéro de dépôt: **94402950.3**

(22) Date de dépôt: **20.12.1994**

(54) **Ralentisseur à courants de Foucault à estimation de couple**

Wirbelstronbremse mit Drehmomentschätzung

Eddy current retarder with torque estimation

(84) Etats contractants désignés:
**AT BE CH DE ES GB IT LI NL PT SE**

(30) Priorité: **23.12.1993 FR 9315584**

(43) Date de publication de la demande:
**28.06.1995 Bulletin 1995/26**

(73) Titulaire: **LABAVIA-S.G.E.**
**F-78051 Saint Quentin en Yvelines Cédex (FR)**

(72) Inventeurs:
• **Estaque, Michel**
**F-95150 Taverny (FR)**
• **Gernot, Philippe**
**F-92150 Suresnes (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 466 941          EP-A- 0 479 674**

• **PATENT ABSTRACTS OF JAPAN vol. 11, no. 44 (M-560) 10 Février 1987 & JP-A-61 206 829 (TOYOTA MOTOR CORP.) 13 Septembre 1986**
• **PATENT ABSTRACTS OF JAPAN vol. 14, no. 99 (E-0893) 22 Février 1990 & JP-A-01 303 100 (TOSHIBA CORP.) 6 Décembre 1989**

## Description

La présente invention concerne un équipement de ralentissement à courants de Foucault pour véhicule.

Les équipements de ce type comprennent habituellement une partie fixée au châssis du véhicule (stator) comportant des enroulements inducteurs, et une partie mobile (rotor) comportant un induit, liée à un élément rotatif du véhicule, généralement à son arbre de transmission. Dans certains ralentisseurs à courants de Foucault, auxquels peut également s'appliquer l'invention, l'induit est porté par le stator, et les enroulements inducteurs sont portés par le rotor (voir par exemple FR-A-2 667 741).

Par "enroulement inducteur", ou simplement "enroulement", on entend ici aussi bien un enroulement inducteur proprement dit qu'un groupe de tels enroulements connectés entre eux une fois pour toutes en série et/ou en parallèle. Chaque enroulement ainsi défini produit un champ magnétique lorsqu'il est alimenté depuis la batterie du véhicule.

L'induit est un corps en matériau ferromagnétique qui, lorsqu'il défile devant les enroulements excités, est le siège de courants tourbillonnaires induits, dits courants de Foucault. Du fait de la résistivité de l'induit, ces courants de Foucault provoquent une dissipation d'énergie d'où résulte le ralentissement du rotor et du véhicule. L'énergie est dissipée sous forme de chaleur, et on donne habituellement au rotor une configuration à ailettes propre à évacuer cette chaleur.

Le conducteur du véhicule peut actionner une manette de commande à plusieurs positions pour obtenir un ralentissement du véhicule avec un couple variable selon la position sélectionnée. Cette variabilité est obtenue par un ensemble de relais qui commandent chacun l'excitation d'un enroulement, le nombre de relais fermés dépendant de la position de la manette. Dans une réalisation typique, il y a quatre enroulements inducteurs et cinq positions de manette correspondant respectivement à la fermeture de 0, 1, 2, 3 et 4 relais, et à des couples de ralentissement proportionnels.

Dans la demande FR-A-2 667 741 précitée, la demanderesse a décrit une façon de déterminer le couple de ralentissement procuré par un ralentisseur à inducteur tournant, à partir d'une mesure de la variation de tension électrique entre deux points de l'induit fixe. Cette technique n'est pas aisément transposable à un ralentisseur à inducteur fixe et induit tournant. En outre, comme elle repose sur une mesure d'un effet de l'excitation de l'inducteur, elle ne permet pas de déterminer quelle serait le couple de ralentissement obtenu pour une consigne d'alimentation autre que celle effectivement appliquée. Or ce type d'information serait très utile dans l'optique d'une gestion rationalisée des différentes ressources de freinage du véhicule (ralentisseur électromagnétique, freins à disques, frein moteur...) .

Le document EP-A-0 466 941 décrit un ralentisseur à courants de Foucault dans lequel une unité électronique commande un rapport cyclique d'alimentation des bobinages inducteurs pour régler le couple de ralentissement. L'unité électronique prend en compte, outre la position du levier de commande du ralentisseur, une mesure de la vitesse de rotation de l'arbre, la position de la pédale d'embrayage, la position de la pédale d'accélérateur, la position de la pédale de frein, la position d'un commutateur de régime automatique (couplage du ralentisseur à la pédale de frein), une donnée représentative de la température des bobinages inducteurs mesurée par un capteur, et une donnée représentative de la température ambiante au voisinage de l'induit mesurée par un capteur porté par le stator. Il est indiqué une dépendance linéaire entre le couple de freinage et le rapport cyclique d'alimentation des bobinages (figure 6). Selon les auteurs du document, le couple engendré pourrait être estimé et contrôlé selon la température des bobinages.

Un but de la présente invention est de proposer un ralentisseur apte à fournir de façon simple une indication relative au couple de ralentissement effectif et/ou disponible.

L'invention propose ainsi un équipement de ralentissement à courants de Foucault pour véhicule, comprenant un ensemble statorique et un ensemble rotorique adapté au montage sur un arbre de transmission du véhicule, l'un desdits ensembles comportant des enroulements inducteurs et l'autre ensemble comportant un induit en regard des enroulements inducteurs, et comprenant en outre des moyens d'excitation pour exciter sélectivement les enroulements inducteurs depuis une source électrique du véhicule en réponse à une consigne d'alimentation, et des moyens de traitement pour estimer le couple de ralentissement que peut procurer l'équipement en fonction de la vitesse de rotation de l'ensemble rotorique, de la température de l'induit, de la température des enroulements inducteurs, et d'au moins une valeur de la consigne d'alimentation.

La demanderesse a constaté que, de façon surprenante, un nombre limité de variables de calcul permettait de rendre compte du couple de ralentissement. La dépendance du couple en fonction de ces variables peut être déterminée préalablement en effectuant des essais sur un exemplaire du modèle de ralentisseur considéré. Lors de ces essais, on mesure le couple fourni par le ralentisseur pour différentes valeurs des variables de calcul. Les données enregistrées peuvent alors être traitées numériquement pour déterminer une fonction qui reproduise de façon approchée la dépendance entre le couple et les variables de calcul. Les moyens de traitement inclus dans les ralentisseurs du modèle considéré sont ensuite programmés avec cette fonction pour pouvoir assurer l'estimation désirée. Une autre méthode consiste à stocker les résultats des essais dans une mémoire associée aux moyens de traitement de chaque ralentisseur du modèle considéré, dans laquelle l'accès sera commandé par une adresse générée sur la base des variables de calcul.

De façon générale, un ralentisseur selon l'invention peut être à inducteur fixe ou tournant.

Un mode de réalisation particulier de l'équipement selon l'invention comprend en outre un organe de commande à plusieurs positions, et des moyens de commande pour établir la consigne d'alimentation en fonction notamment de la position de l'organe de commande, les moyens de traitement étant adaptés pour estimer le couple de ralentissement en fonction de la vitesse de rotation de l'ensemble rotorique, de la température de l'induit, de la température des enroulements inducteurs et de la valeur de la consigne d'alimentation établie par les moyens de commande, afin d'estimer le couple de ralentissement effectivement procuré par l'équipement.

Alternativement ou cumulativement, les moyens de traitement peuvent être adaptés pour estimer au moins une valeur du couple de ralentissement que procurerait l'équipement pour une valeur prédéterminée de la consigne d'alimentation .

Cette possibilité d'estimer le couple disponible pour une ou plusieurs valeurs de la consigne d'alimentation est offerte grâce au fait que chacune des variables intervenant dans le calcul du couple peut être mesurée ou évaluée indépendamment du fonctionnement effectif du ralentisseur.

Dans un mode de réalisation particulièrement avantageux, les moyens de traitement sont adaptés pour évaluer en temps réel la température de l'induit à des instants successifs, la température de l'induit à chaque instant de la succession étant évaluée par les moyens de traitement en fonction de plusieurs variables de calcul comprenant la température de l'induit évaluée à l'instant précédent de la succession, la vitesse de rotation de l'ensemble rotorique et la consigne d'alimentation appliquée aux moyens d'excitation, la température de l'induit ainsi estimée étant prise en compte pour l'estimation du couple de ralentissement. Dans le cas où l'induit est compris dans l'ensemble rotorique, cette disposition permet une détermination de la température de l'induit sans avoir à utiliser un capteur difficile à installer et dont la fiabilité des mesures peut être problématique.

D'autres particularités et avantages de la présente invention apparaîtront dans la description ci-après d'un exemple de réalisation préféré et non limitatif, lue conjointement aux dessins annexés, dans lesquels :

- la figure 1 est un schéma d'un équipement de ralentissement selon l'invention ;
- la figure 2 est un graphique illustrant un exemple d'évolution de la température de l'induit en fonction du temps pour un équipement tel que celui de la figure 1; et
- les figures 3 et 4 sont des graphiques illustrant une façon de déterminer des coefficients intervenant dans le calcul du couple pour un équipement tel que celui de la figure 1.

L'invention sera décrite ci-après, à titre d'exemple, dans le cas d'un ralentisseur à induit tournant. Les enroulements inducteurs 3, au nombre de quatre, sont compris dans un ensemble statorique 1, et l'induit 6 est compris dans un ensemble rotorique 2.

Les enroulements 3 sont par exemple constitués chacun par une paire de bobines, les huit bobines étant disposées autour de l'arbre de transmission (non représenté) sortant de la boîte de vitesses du véhicule, et avec leurs axes parallèles à cet arbre. Le rotor 2 est une pièce en acier moulé comportant un alésage central 4 destiné au montage solidaire sur l'arbre de transmission. Le rotor 2 comporte un ou plusieurs disques perpendiculaires à l'arbre de transmission qui constituent l'induit 6 du rotor. Entre l'induit 6 et l'alésage 4, chaque disque a classiquement une structure à ailettes 7 fournissant une ventilation lorsque l'arbre de transmission tourne. Lorsque l'équipement est assemblé sur le véhicule, l'induit 6 est situé en regard des enroulements 3 du stator 1. Dans une réalisation typique, le rotor 2 comporte un disque de chaque côté du stator, de façon que chaque disque-induit 6 défile devant une couronne de pôles magnétiques de polarités alternées de proche en proche, créée par les enroulements 3. La rotation de l'arbre de transmission génère des courants de Foucault dans l'induit 6 quand l'un au moins des enroulements est alimenté électriquement depuis la batterie 8 du véhicule. Il en résulte un couple de ralentissement croissant avec le nombre d'enroulements excités, et un échauffement de l'induit que compense en partie la ventilation par les ailettes 7.

L'équipement comprend des moyens d'excitation 9 pour alimenter sélectivement les enroulements 3 depuis la batterie 8, laquelle a typiquement une tension nominale de 24 Volts. Ces moyens d'excitation 9 sont constitués par quatre relais 11 montés chacun entre la borne positive de la batterie et une extrémité d'un enroulement respectif 3, l'autre extrémité dudit enroulement étant reliée à la borne négative de la batterie 8. Les quatre relais 11 sont commandés indépendamment par quatre signaux issus des moyens de commande 12.

Les moyens de commande 12 peuvent être constitués par une unité électronique du type microcontrôleur comportant un processeur 13 associé à une mémoire 14 et à des circuits d'interface 15, 16, 17. L'interface d'entrée 16 reçoit un certain nombre de signaux électriques parmi lesquels :

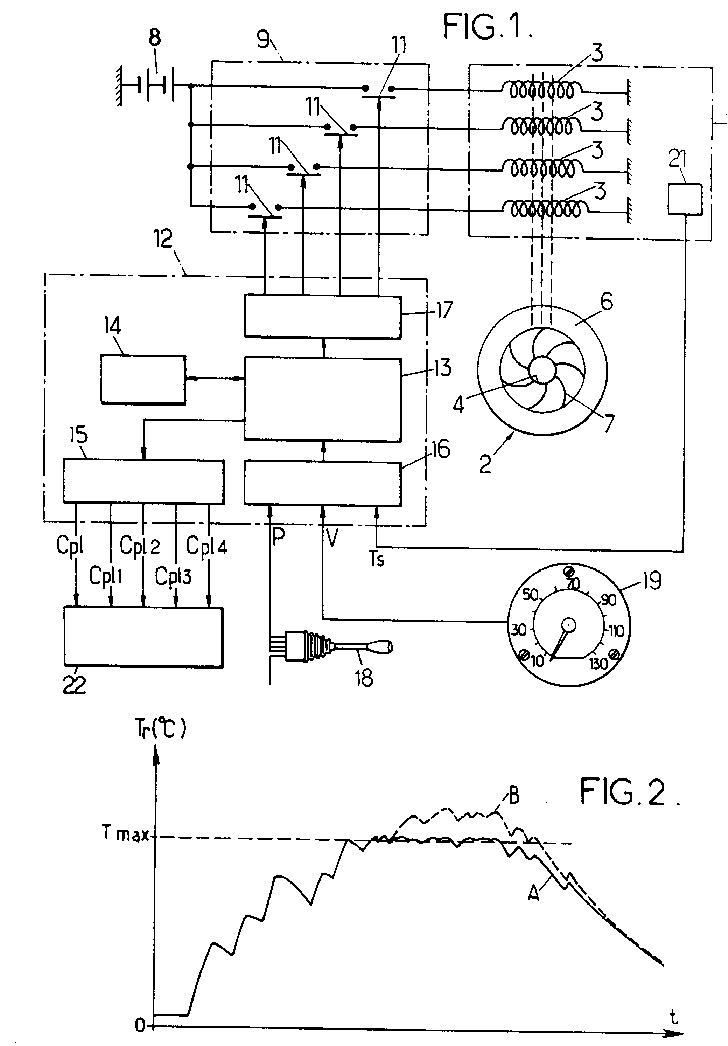

- un signal issu d'un organe de commande manuelle à cinq positions 18, tel qu'une manette accessible au conducteur du véhicule, et représentant la position P de cet organe ;
- un signal issu du tachymètre 19 (représenté symboliquement par un cadran à la figure 1) associé à l'arbre de transmission pour en mesurer la vitesse de rotation V ; et

- un signal issu d'un capteur de température 21 monté sur le stator 1 et sensible à la température Ts des enroulements 3.

Les moyens de commande 12 peuvent encore recevoir d'autres signaux et accomplir d'autres fonctions non explicitées ici car non concernées directement par l'invention.

L'interface d'entrée 16 met en forme les signaux précités et transmet les valeurs correspondantes au processeur 13. Celui-ci est programmé pour établir une consigne d'alimentation C sur la base des valeurs P, V, Ts reçues de l'interface 16. En fonction de la consigne C, le processeur 13 délivre, via l'interface de sortie 17, les quatre signaux qui commandent l'ouverture ou la fermeture de chacun des relais 11. La consigne C prend l'une des cinq valeurs : 0, 1, 2, 3 ou 4, et donne lieu à la fermeture d'un nombre correspondant de relais 11, c'est-à-dire à l'excitation d'un nombre correspondant d'enroulements inducteurs 3.

Pour établir la consigne d'alimentation C, il est tenu compte d'une indication relative à la température Tr de l'induit 6 qui est une évaluation de cette température Tr obtenue en temps réel par le processeur 13.

L'évaluation est affectée à des instants successifs séparés par un intervalle de temps prédéterminé $\Delta t$ suffisamment petit vis-à-vis des échelles de temps significatives des variations de température de l'induit (par exemple $\Delta t=1s$). A chaque instant $t_n$ de la succession, la température $Tr_n$ de l'induit 6 est évaluée en fonction des variables de calcul suivantes :

- température $Tr_{n-1}$ de l'induit évaluée à l'instant précédent $t_{n-1} = t_n - \Delta t$ de la succession ;
- vitesse de rotation V du rotor 2 fournie par le tachymètre 19 ;
- consigne d'alimentation C, dont la valeur peut être prise soit à l'instant $t_n$ de l'évaluation soit à l'instant précédent $t_{n-1}$ ; et
- températures Ts des enroulements 3 fournie par le capteur 21.

La demanderesse a déterminé que, pour la plupart des modèles de ralentisseur, la température de l'induit pouvait être évaluée avec une précision satisfaisante par une fonction polynomiale des variables $Tr_{n-1}$, V, C, Ts telle que :

$$Tr_n = Tr_{n-1} + a.\Delta t.kp.(b.V + c.Tr_{n-1} + d.V.Tr_{n-1} + e.Tr_{n-1}^2 + f.V.Ts) \qquad (1)$$

dans laquelle :

b = + (b1 + b2.C),
c = - (c1 + c2.C),
d = - (d1 + d2.C),
e = + (e1 + e2.C),
f = - f2.C,
kp = 1 + (kp0 - 1).V/3000, et
a, b1, b2, c1, c2, d1, d2, e1, e2, f2 et kp0 sont des coefficients constants à déterminer pour chaque modèle, la vitesse V étant exprimée en tours par minute, l'intervalle de temps $\Delta t$ en secondes et les températures $Tr_n$, $Tr_{n-1}$, et Ts en degrés Celsius.

Pour déterminer les coefficients a, b1, b2, c1, c2, d1, d2, e1, e2, f2 et kp0, on peut procéder à des essais sur un prototype du ralentisseur. On reproduit sur le banc d'essai un nombre important de situations caractérisées par les valeurs des variables d'essai considérées, et on mesure les variations de température de l'induit pendant l'intervalle de temps $\Delta t$. Chaque mesure fournit une valeur de la fonction liant $Tr_n$ aux variables $Tr_{n-1}$, V, C et Ts. On peut ensuite calculer le jeu de coefficients qui fournit la meilleure approximation des résultats de mesure par la formule (1), par exemple au moyen d'une méthode classique d'ajustement par moindres carrés mise en oeuvre par ordinateur.

On peut ainsi obtenir un bon accord entre la formule (1) et le comportement thermique de l'induit. Dans certains cas, on peut obtenir un accord satisfaisant sans inclure la température Ts des enroulements dans les variables de calcul, c'est-à-dire en imposant f2=0. Ceci peut s'expliquer par le fait que les variations de température du stator résultent principalement de celles de la température de l'induit et de la consigne d'alimentation, de sorte que la variable Ts peut parfois être écartée par un choix approprié des coefficients a, b1, b2, c1, c2, d1, d2, e1, e2 et kp0.

Le jeu de coefficients et les données utiles à l'évaluation selon la formule (1) sont stockés dans la mémoire 14 des moyens de commande 12 de chacun des ralentisseurs du modèle testé. En service, la température de l'induit pourra ainsi être évaluée en temps réel par le processeur 13, sans qu'il soit indispensable d'utiliser un capteur spécial et de subir les inconvénients qui s'y rapportent.

Pour initialiser l'algorithme représenté par la formule (1) avant la mise en oeuvre de l'équipement de ralentissement, on peut par exemple donner à la température de l'induit $Tr_0$ à l'instant initial la valeur Ts de la température des enroulements, ou une valeur de température ambiante fournie par un thermomètre.

La température évaluée $Tr_n$ est utilisée pour établir la consigne de commande C pendant l'intervalle de temps $\Delta t$ suivant l'évaluation. Par exemple, le processeur 13 compare la température évaluée $Tr_n$ à un seuil prédéterminé Tmax dont la valeur, choisie en fonction du modèle de ralentisseur, est stockée dans la mémoire 14. Lorsque $Tr_n$ reste inférieure au seuil Tmax, la consigne C est conforme à la position P de la manette de commande 18, le conducteur du véhicule actionnant alors la manette 18 pour sélectionner directement le nombre d'enroulements excités et obtenir ainsi un couple de ralentissement proportionnel. Lorsque $Tr_n$ dépasse le seuil Tmax, le processeur 13 impose une consigne d'alimentation C inférieure au nombre correspondant à la position de la manette 18. Ceci limite l'échauffement de l'induit 6 ainsi que du stator 1, et permet une meilleure gestion des ressources électriques du véhicule sans affecter trop sensiblement la valeur du couple de ralentissement car celle-ci tend à décroître lorsque la température de l'induit augmente pour une excitation donnée.

Ce comportement est illustré par le graphique de la figure 2 où le temps t, en abscisse, représente un intervalle de simulation d'environ 15 minutes. La courbe A indique l'évolution de la température de l'induit Tr dans le cas où le véhicule est en descente et où le conducteur utilise différentes positions de la manette 18. La température Tr ne dépasse pratiquement pas le seuil Tmax (environ 630°C dans l'exemple représenté) car dès que cela se produit, la consigne d'alimentation est diminuée. La courbe en tirets B indique ce que serait l'évolution de Tr dans les mêmes conditions si l'indication de température n'était pas prise en compte : le seuil Tmax serait largement dépassé et on obtiendrait certes du couple supplémentaire, mais au prix d'une consommation en électricité bien supérieure. La décroissance finale des courbes A et B correspond à la désactivation du ralentisseur, c'est-à-dire à la remise de la manette 18 en position P = 0. Dans cette phase, on conserve une température plus faible (courbe A au-dessous de la courbe B) de sorte que si on rencontre un nouveau besoin de ralentissement avant que l'induit se soit refroidi jusqu'à la température ambiante, le couple immédiatement disponible est supérieur à ce qu'il serait sans prise en compte de la température.

Dans une variante, on n'utilise pas de capteur 21 pour mesurer la température Ts des enroulements. On peut programmer le processeur 13 pour qu'il l'évalue également par un algorithme du même type que celui décrit plus haut.

A cette fin, on peut utiliser simplement une formule du type :

$$Ts_n = Ts_{n-1} + (g2.Tr_{n-1} - g1). \Delta t \qquad (2)$$

où $Ts_n$ et $Ts_{n-1}$ représentent les températures des enroulements 3 évaluées respectivement aux instants $t_n$ et $t_{n-1}$, et où g1 et g2 désignent deux coefficients constants à déterminer expérimentalement comme exposé ci-dessus pour les autres coefficients.

Une autre variante consiste à déterminer la température Ts en mesurant la tension U et l'intensité I dans un enroulement 3 et en calculant la résistance R = U/I. Dans le cas typique d'enroulements en fil de cuivre, la résistance varie sensiblement en fonction de la température et peut être utilisée pour la mesurer.

Le processeur 13 est également programmé pour estimer, conformément à l'invention, le couple de ralentissement que peut procurer le ralentisseur en fonction des paramètres V, Tr, Ts et d'une ou plusieurs valeurs de la consigne d'alimentation C.

Cette estimation peut par exemple être effectuée avec une bonne précision par une fonction des variables V, Tr, Ts, C de la forme :

$$X = C.V^{\alpha}. (K0 + K1.V + K2.Tr + K3.Ts + K4.V.Tr + K5.V.Ts + K6.Tr.Ts + K7.V^2 + K8. Tr^2) \qquad (3)$$

dans laquelle $\alpha$ et K0 - K8 sont des coefficients constants à déterminer pour chaque modèle de ralentisseur. En général, l'exposant $\alpha$ est compris entre 0,3 et 0,5, les coefficients K0 et K1 sont positifs, et les coefficients K2 et K3 sont négatifs, le signe des autres coefficients K4 à K8 pouvant varier d'un modèle à un autre.

Les coefficients $\alpha$ et K0 - K8 peuvent être déterminés en procédant à des essais sur un prototype du ralentisseur. On reproduit au banc d'essai un grand nombre de situations (valeurs de C, V, Tr et Ts), on mesure les valeurs correspondantes du couple Cpl, puis on calcule le jeu de coefficients qui fournit la meilleure approximation des résultats par la formule (3), par exemple par une méthode numérique d'ajustement par moindres carrés.

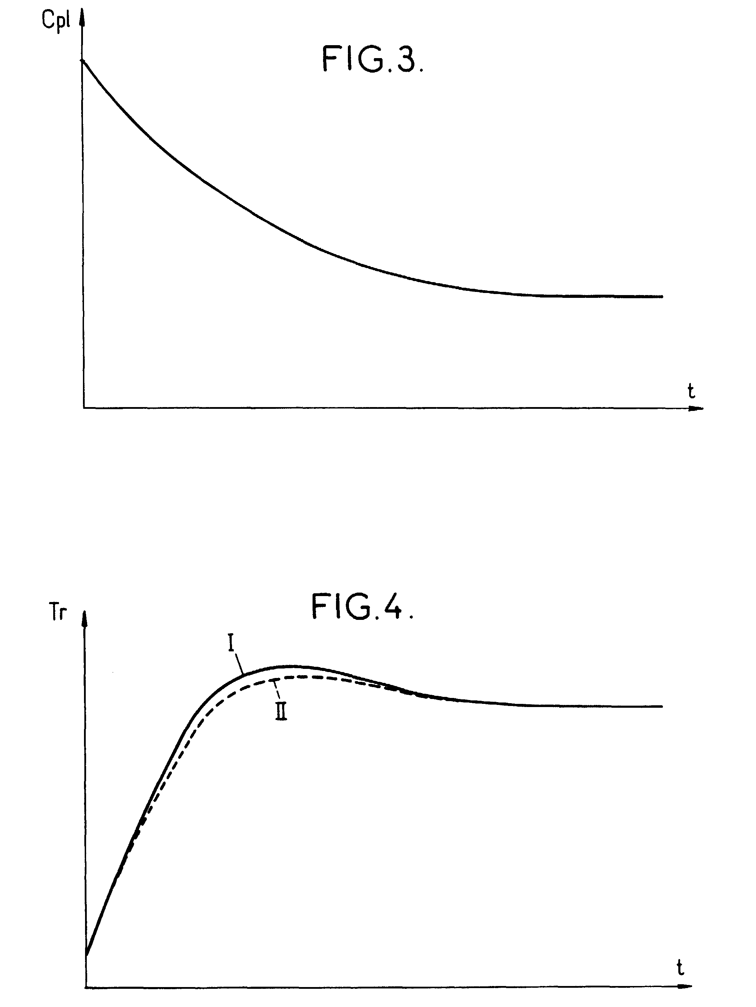

Sur le banc d'essai, on accouple le rotor 2 à un moteur suffisamment puissant pour imposer la vitesse de rotation, et on déduit le couple de ralentissement d'une mesure de la force de réaction subie par le support du stator 1. Une séquence d'essai effectuée en imposant une vitesse V constante et une consigne d'alimentation donnée peut conduire à une évolution temporelle de la mesure du couple de ralentissement Cpl telle que celle illustrée sur la figure 3, la valeur à long terme du couple étant typiquement réduite à environ un tiers de sa valeur initiale en raison de l'échauffement. Parallèlement, on fait fonctionner le processeur 13 selon les algorithmes correspondant aux formules (1) et (2) pour évaluer en temps réel les températures Tr et Ts. L'allure typique de l'évolution temporelle de la température évaluée de l'induit Tr est par exemple telle qu'indiquée par la courbe I sur la figure 4. La séquence d'essai fournit ainsi une série de quintuplets (Cpl, C, V, Tr, Ts) utilisés ensuite pour optimiser le choix des coefficients $\alpha$, K0 - K8.

Si, en service, la température Ts des enroulements 3 est non pas évaluée selon la formule (2), mais mesurée, elle doit bien entendu être également mesurée dans la phase d'essai pour qu'on ne perde pas de précision.

Il en est de même de la température Tr de l'induit. Pour certains ralentisseurs, cette température pourra être mesurée par un capteur plutôt qu'évaluée comme dans l'exemple détaillé plus haut. Cette température doit alors être également mesurée en phase d'essai, ce qui donne lieu à une évolution temporelle ayant par exemple l'allure de la courbe II sur la figure 4. L'écart possible entre les courbes I et II est dû soit aux erreurs d'approximation résultant de la formule (1), soit aux erreurs de mesure qui sont inévitables compte tenu de la difficulté de détecter fidèlement la température de l'induit tournant. Il importe d'appliquer le même mode de détermination de Tr lors des essais et en service, car c'est dans la gamme des hautes températures que l'écart peut être le plus sensible, gamme dans laquelle les variations du couple avec la température sont les plus importantes.

Les coefficients optimisés $\alpha$, K0 - K8 et les données utiles à l'estimation selon la formule (3) sont stockés dans la mémoire 14 des moyens de commande 12 de chacun des ralentisseurs du modèle testé. En service, le processeur 13 peut appliquer la formule (3) en utilisant comme valeur de la consigne C celle qu'il a déterminée comme exposé précédemment pour commander les moyens d'excitation 9. On estime ainsi le couple X = Cpl effectivement procuré par le ralentisseur. Cette estimation Cpl est fournie, via l'interface de sortie 15, à un dispositif extérieur 22 assurant par exemple une gestion centralisée des différentes ressources de freinage du véhicule. L'estimation Cpl peut également être affichée pour que le conducteur se rende compte de l'efficacité du ralentissement et prenne le cas échéant les initiatives nécessaires.

Le processeur 13 peut également appliquer la formule (3) avec une ou plusieurs valeurs prédéterminées de la consigne C. On estime ainsi le couple X = Cpl1, Cpl2, Cpl3 ou Cpl4 qui est disponible pour une excitation C = 1, 2, 3 ou 4. Dans l'exemple représenté sur la figure 1, les quatre estimations Cpl1 - Cpl4 sont fournies au dispositif extérieur 22 en plus de l'estimation du couple effectif Cpl. Comme, dans la formule (3), le couple est simplement proportionnel à la variable C, on peut également ne fournir au dispositif 22 que la consigne C établie par le processeur 13 et une valeur, par exemple Cpl1, du couple estimé.

On notera que l'invention peut s'appliquer à différents types de ralentisseurs à courants de Foucault, et qu'en particulier le mode de commande des enroulements inducteurs peut dans certains cas être très différent de celui décrit ici à titre d'exemple.

## Revendications

**1.** Equipement de ralentissement à courants de Foucault pour véhicule, comprenant un ensemble statorique (1) et un ensemble rotorique (2) adapté au montage sur un arbre de transmission d'un véhicule, l'un desdits ensemble comportant des enroulements inducteurs (3) et l'autre ensemble comportant un induit (6) en regard des enroulements inducteurs (3), et comprenant en outre des moyens d'excitation (9) pour exciter sélectivement les enroulements inducteurs (3) depuis une source électrique (8) du véhicule en réponse à une consigne d'alimentation (C), et des moyens de traitement pour estimer le couple de ralentissement (Cpl, Cpl1 - Cpl4) que peut procurer l'équipement en fonction de la vitesse de rotation (V) de l'ensemble rotorique (2), de la température (Tr) de l'induit (6), de la température (Ts) des enroulements inducteurs (3), et d'au moins une valeur de la consigne d'alimentation (C).

**2.** Equipement selon la revendication 1, caractérisé en ce qu'il comprend en outre un organe de commande (18) à plusieurs positions, et des moyens de commande (12) pour établir la consigne d'alimentation (C) en fonction notamment de la position (P) de l'organe de commande (18), les moyens de traitement (13) étant adaptés pour estimer le couple de ralentissement (Cpl) en fonction de la vitesse (V) de l'ensemble rotorique (2), de la température (Tr) de l'induit (6), de la température (Ts) des enroulements inducteurs (3) et de la valeur de la consigne d'alimentation (C) établie par les moyens de commande (12), afin d'estimer le couple de ralentissement effectivement procuré par l'équipement.

**3.** Equipement selon la revendication 1 ou 2, caractérisé en ce que les moyens de traitement (13) sont adaptés pour estimer au moins une valeur (Cpl1 - Cpl4) du couple de ralentissement que procurerait l'équipement pour une valeur prédéterminée de la consigne d'alimentation (C).

**4.** Equipement selon l'une quelconque des revendications 1 à 3, caractérisé en ce que l'ensemble statorique (1) comporte les enroulements inducteurs (3) tandis que l'ensemble rotorique (2) comporte l'induit (6), et en ce que les moyens de traitement (13) sont adaptés pour évaluer en temps réel la température de l'induit (6) à des instants successifs, la température de l'induit ($Tr_n$) à chaque instant ($t_n$) de la succession étant évaluée par les moyens de traitement (13) en fonction de plusieurs variables de calcul comprenant la température de l'induit ($Tr_{n-1}$) évaluée à l'instant précédent ($t_{n-1}$) de la succession, la vitesse de rotation (V) de l'ensemble rotorique et la consigne d'alimentation (C) appliquée aux moyens d'excitation (9), la température de l'induit (6) ainsi estimée étant prise en compte pour l'estimation du couple de ralentissement (Cpl, Cpl1 - Cpl4).

**5.** Equipement selon la revendication 4, caractérisé en ce que lesdites variables de calcul comprennent en outre la température des enroulements inducteurs (3).

**6.** Equipement selon la revendication 5, caractérisé en ce qu'il comprend en outre des moyens (21) sensibles à la température (Ts) des enroulements inducteurs (3) et adressant aux moyens de commande (12) un signal représentant la température des enroulements inducteurs comprise dans les variables de calcul.

**7.** Equipement selon la revendication 5, caractérisé en ce que la température ($Ts_n$) des enroulements inducteurs comprise dans les variables de calcul est évaluée par les moyens de traitement (13) à chaque instant ($t_n$) de la succession en fonction de la température de l'induit ($Tr_{n-1}$) et de la température ($Ts_{n-1}$) des enroulements inducteurs évaluées à l'instant précédent ($t_{n-1}$) de la succession.

**8.** Equipement selon l'une quelconque des revendications 4 à 7, caractérisé en ce que les moyens de traitement (13) sont agencés pour évaluer la température de l'induit ($Tr_n$) à chaque instant ($t_n$) de la succession par la formule suivante :

$$Tr_n = Tr_{n-1} + a.\Delta t.kp.(b.V + c.Tr_{n-1} + d.V.Tr_{n-1} + e.Tr^2_{n-1} + f.V.Ts)$$

dans laquelle :

b = + (b1 + b2.C),
c = - (c1 + c2.C),
d = - (d1 + d2.C),
e = + (e1 + e2.C),
f = - f2.C,
kp = 1 + (kp0 - 1).V/3000,
a, b1, b2, c1, c2, d1, d2, e1, e2, f2 et kp0 sont des coefficients constants,
$\Delta t$ désigne l'intervalle de temps séparant ledit instant ($t_n$) de l'instant précédent ($t_{n-1}$) de la succession,
V désigne la vitesse de rotation de l'ensemble rotorique (2),
C désigne la consigne d'alimentation appliquée aux moyens d'excitation (9), égale au nombre d'enroulements (3) alimentés,
Ts désigne la température des enroulements inducteurs, et
$Tr_n$ et $Tr_{n-1}$ désignent la température de l'induit respectivement audit instant ($t_n$) et à l'instant précédent ($t_{n-1}$) de la succession.

**9.** Equipement selon l'une quelconque des revendications 4 à 8, caractérisé en ce qu'il comprend un organe de commande (18) à plusieurs positions, et des moyens de commande (12) pour établir la consigne d'alimentation (C) en fonction notamment de la position (P) de l'organe de commande (18), et en ce que les moyens de commande (12) sont agencés pour modifier automatiquement la consigne d'alimentation (C) appliquée aux moyens d'excitation (9) lorsque la température ($Tr_n$) évaluée par les moyens de traitement (13) dépasse un seuil prédéterminé (Tmax), de façon que les moyens d'excitation (9) relient alors à la source électrique (8) un nombre d'enroulements inducteurs (3) inférieur au nombre correspondant à la position (P) de l'organe de commande (18).

**10.** Equipement selon l'une quelconque des revendications 1 à 9, caractérisé en ce que les moyens de traitement (13) sont agencés pour estimer une valeur X du couple de ralentissement par la formule suivante :

$$X = C.\, V^{\alpha}.\, (K0 + K1.V + K2.Tr + K3.Ts + K4.V.Tr + K5.V.Ts + K6.Tr.Ts + K7.V^2 + K8.Tr^2)$$

dans laquelle :

$\alpha$, K0, K1, K2, K3, K4, K5, K6, K7 et K8 sont des coefficients constants,
C désigne la valeur considérée de la consigne d'alimentation,
V désigne la vitesse de rotation de l'ensemble rotorique (2),
Tr et Ts désignent respectivement les températures de l'induit (6) et des enroulements inducteurs (3).

**Patentansprüche**

1. Wirbelstrom-Bremsanlage für Fahrzeuge mit einer Statoranordnung (1) und einer zur Montage auf einer Getriebewelle eines Fahrzeugs ausgelegten Rotoranordnung (2), wobei eine der beiden Anordnungen Erregerwicklungen (3) und die andere Anordnung einen Läufer (6) gegenüber den Erregerwicklungen (3) aufweist, und außerdem mit Erregereinrichtungen (9) zur selektiven Erregung der Erregerwicklungen (3) von einer Stromquelle (8) des Fahrzeugs aus im Ansprechen auf einen Stromversorgungsbefehl (C), wobei Verarbeitungseinrichtungen zum Hochrechnen des Verlangsamungsmoments (Cp1, Cpl1 - Cpl4) vorgesehen sind, welches von der Bremsanlage aufgebracht werden kann, **dadurch gekennzeichnet**, daß diese Hochrechnung in Abhängigkeit von der Umlaufgeschwindigkeit (V) der Rotoranordnung (2), der Temperatur (Ts) der Erregerwicklungen (3) und mindestens eines Wertes des Stromversorgungsbefehls (C) erfolgt.

2. Bremsanlage nach Anspruch 1, dadurch gekennzeichnet, daß sie des weiteren ein Steuerorgan (18) mit mehreren Stellungen und eine Regeleinrichtung (12) zum Erzeugen des Stromversorgungsbefehls (C) in Abhängigkeit vornehmlich von der Stellung (P) des Steuerorgans (18) aufweist, wobei die Verarbeitungseinrichtung (13) zum Hochrechnen des Verlangsamungsmoments (Cpl) in Abhängigkeit von der Geschwindigkeit (V) der Rotoranordnung (2), der Temperatur (Tr) des Läufers (6), der Temperatur (Ts) der Erregerwicklungen (3) und Wertes des Stromversorgungsbefehls (C) ausgelegt ist, welcher von der Regeleinrichtung (12) zum Hochrechnen des von der Anlage tatsächlich aufgebrachten Verlangsamungsmoments erzeugt wird.

3. Bremsanlage nach Anspruch 1 oder 2, dadurch gekennzeichnet, daß die Verarbeitungseinrichtung (13) zum Hochrechnen mindestens eines Wertes (Cpl1 - Cpl4) des Verlangsamungsmoments ausgelegt ist, welches die Anlage bei einem vorgegebenen Wert des Stromversorgungsbefehls (C) aufbringt.

4. Bremsanlage nach einem der Ansprüche 1 bis 3, dadurch gekennzeichnet, daß die Statoranordnung (1) Erregerwicklungen (3) aufweist, wohingegen die Rotoranordnung (2) den Läufer (6) umfaßt, und daß die Verarbeitungseinrichtung (13) so ausgelegt ist, daß sie in Echtzeit die Temperatur des Läufers (6) zu aufeinanderfolgenden Zeitpunkten bestimmt, wobei die Temperatur des Läufers ($Tr_n$) zu jedem Zeitpunkt ($t_n$) in der Folge der Zeitpunkte von der Verarbeitungseinrichtung (13) in Abhängigkeit von mehreren veränderlichen Berechnungsgrößen bestimmt wird, zu denen die zum vorhergehenden Zeitpunkt ($t_{n-1}$) in der Folge bestimmte Temperatur des Läufers ($Tr_{n-1}$), die Umlaufgeschwindigkeit (V) der Rotoranordnung und der an die Erregereinrichtung (9) angelegte Stromversorgungsbefehl (C) gehören, wobei die so hochgerechnete Temperatur des Läufers (6) bei der Hochrechnung des Verlangsamungsmoments (Cp1, Cpl1 - Cpl4) berücksichtigt wird.

5. Bremsanlage nach Anspruch 4, dadurch gekennzeichnet, daß die veränderlichen Berechnungsgrößen außerdem die Temperatur der Erregerwicklungen (3) beinhalten.

6. Bremsanlage nach Anspruch 5, dadurch gekennzeichnet, daß sie des weiteren eine gegenüber der Temperatur (Ts) der Erregerwicklungen (3) empfindliche Einrichtung (21) aufweist, welche die Regeleinrichtung (12) mit einem Signal ansteuert, welches die in den veränderlichen Berechnungsgrößen enthaltene Temperatur der Erregerwicklungen repräsentiert.

7. Bremsanlage nach Anspruch 5, dadurch gekennzeichnet, daß die in den veränderlichen Berechnungsgrößen enthaltene Temperatur ($Ts_n$) der Erregerwicklungen von der Verarbeitungseinrichtung zu jedem Zeitpunkt ($t_n$) in der Folge in Abhängigkeit von der Temperatur des Läufers ($Tr_{n-1}$) und der Temperatur ($Ts_{n-1}$) der Erregerwicklungen bestimmt wird, welche zum vorhergehenden Zeitpunkt ($t_{n-1}$) in der Folge bestimmt wurden.

8. Bremsanlage nach einem der Ansprüche 4 bis 7, dadurch gekennzeichnet, daß die Verarbeitungseinrichtung (13) so angesteuert wird, daß sie die Temperatur des Läufers ($Tr_n$) zu jedem Zeitpunkt ($t_n$) in der Folge nach der folgenden Formel bestimmt:

$$Tr_n = Tr_{n-1} + a \cdot \Delta t \cdot kp \cdot (b \cdot V + c \cdot Tr_{n-1} + d \cdot V \cdot Tr_{n-1} + e \cdot Tr^2_{n-1} + f \cdot V \cdot Ts)$$

in welcher:

b = + (b1 + b2·C),
c = - (c1 + c2·C),
d = - (d1 + d2·C),
e = + (e1 + e2·C),
f = - f2·C),
kp = 1 + (kp0 - 1) · v/3000,

wobei a, b1, b2, c1, c2, d1, d2, e1, e2, f2 und kp0 konstante Koeffizienten sind,
$\Delta t$ den Zeitraum zwischen dem Zeitpunkt ($t_n$) und dem vorhergehenden Zeitpunkt ($t_{n-1}$) in der Folge bezeichnet,
V die Umlaufgeschwindigkeit der Rotoranordnung (2) angibt,
C den an die Erregereinrichtung (9) angelegten Stromversorgungsbefehl bezeichnet, der gleich der Anzahl der stromdurchflossenen Wicklungen (3) ist,
Ts die Temperatur der Erregerwicklungen angibt, und
$Tr_n$ und $Tr_{n-1}$ die jeweilige Temperatur des Läufers zu dem Zeitpunkt ($t_n$) bzw. zum vorhergehenden Zeitpunkt ($t_{n-1}$) in der Folge bezeichnen.

9. Bremsanlage nach einem der Ansprüche 4 bis 8, dadurch gekennzeichnet, daß sie ein Steuerorgan (18) mit mehreren Stellungen und eine Regeleinrichtung (12) zum Erzeugen des Stromversorgungsbefehls (C) in Abhängigkeit vornehmlich von der Stellung (P) des Steuerorgans (18) aufweist, und daß die Regeleinrichtung (12) so angesteuert wird, daß sie den an die Erregereinrichtung (9) angelegten Stromversorgungsbefehl (C) automatisch verändert, wenn die von der Verarbeitungseinrichtung (13) bestimmte Temperatur einen vorgegebenen Schwellwert (Tmax) überschreitet, so daß die Erregereinrichtung (9) nun eine Anzahl von Erregerwicklungen (3) mit der Stromquelle (8) verbinden, die kleiner als die der Position (P) des Steuerorgans (18) entsprechende Zahl ist.

10. Bremsanlage nach einem der Ansprüche 1 bis 9, dadurch gekennzeichnet, daß die Verarbeitungseinrichtung (13) so angesteuert wird, daß sie einen Wert X des Verlangsamungsmoments nach der folgenden Formel bestimmt:

$$X = C \cdot V^\alpha \cdot /K0 + K1 \cdot V + K2 \cdot Tr + K3 \cdot Ts + K4 \cdot V \cdot Tr + K5 \cdot V \cdot Ts + K6 \cdot Tr \cdot Ts + K7 \cdot V^2 + K8 \cdot Tr^2)$$

in welcher:

$\alpha$, K0, K1, K2, K3, K4, K5, K6, K7 und K8 konstante Koeffizienten sind,
C den jeweils berücksichtigten Wert des Stromversorgungsbefehls angibt,
V die Umlaufgeschwindigkeit der Rotoranordnung (2) angibt, und
Tr und Ts jeweils die Temperatur des Läufers (6) bzw. der Erregerwicklungen (3) bezeichnen.

## Claims

1. Eddy current brake equipment for a vehicle, the brake equipment comprising a stator assembly (1) and a rotor assembly (2) adapted to be mounted on a transmission shaft of a vehicle, one of said assemblies including inductor windings (3) and the other assembly including an armature (6) facing the inductor windings (3), the brake equipment also including excitation means (9) for selectively exciting the inductor windings (3) from an electricity source (8) of the vehicle in response to a power feed setting (C), and processor means to estimate the braking torque (Cpl, Cpl1 - Cp14) that can be provided by the equipment as a function of the speed of rotation (V) of the rotor assembly (2), of the temperature (Tr) of the armature (6), of the temperature (Ts) of the inductor windings (3), and of at least one value for the power feed setting (C).

2. Equipment according to claim 1, characterized in that it further comprises a control member (18) having a plurality of positions, and control means (12) for establishing the power feed setting (C) as a function in particular of the position (P) of the control member (18), the processor means (13) being adapted to estimate the braking torque (Cpl) as a function of the speed (V) of the rotor assembly (2), of the temperature (Tr) of the armature (6), of the temperature (Ts) of the inductor windings (3), and of the value of the power feed setting (C) established by the control means (12) in order to estimate the braking torque actually produced by the equipment.

3. Equipment according to claim 1 or 2, characterized in that the processor means (13) are adapted to estimate at least one value (Cpl1 - Cpl4) of the braking torque that would be produced by the equipment for a predetermined value of the power feed setting (C).

4. Equipment according to any one of claims 1 to 3, characterized in that the stator assembly (1) includes the inductor windings (3) while the rotor assembly (2) includes the armature (6), and in that the processor means (13) are adapted to evaluate in real time the temperature of the armature (6) at successive instants, the temperature of the armature ($Tr_n$) at each instant ($t_n$) of the succession being evaluated by the processor means (13) as a function of a plurality of computation variables comprising the armature temperature ($Tr_{n-1}$) evaluated at the preceding instant ($t_{n-1}$) of the succession, the speed of rotation (V) of the rotor assembly, and the power feed setting (C) applied to the excitation means (9), with the armature temperature as estimated in this way being taken into account when estimating the braking torque (Cpl, Cpl1 - Cpl4).

5. Equipment according to claim 4, characterized in that said computation variables further comprise the temperature of the inductor windings (3).

6. Equipment according to claim 5, characterized in that it further comprises means (21) responsive to the temperature (Ts) of the inductor windings (3) and applying a signal to the control means (12) representative of the inductor winding temperature included in the computation variables.

7. Equipment according to claim 5, characterized in that the inductor winding temperature ($TS_n$) included in the computation variables is evaluated by the processor means (13) at each instant ($t_n$) of the succession as a function of the armature temperature ($Tr_{n-1}$) and the inductor winding temperature ($Ts_{n-1}$) as evaluated at the preceding instant ($t_{n-1}$) of the succession.

8. Equipment according to any one of claims 4 to 7, characterized in that the processor means (13) are arranged to evaluate the armature temperature ($Tr_n$) at each instant ($t_n$) of the succession by the following formula:

$$Tr_n = Tr_{n-1} + a.\Delta t.kp.(b.V + c.Tr_{n-1} + d.V.Tr_{n-1} + e.Tr_{n-1}^2 + f.V.Ts)$$

in which:

$b = +(b1 + b2.C)$
$c = -(c1 + c2.C)$
$d = -(d1 + d2.C)$
$e = +(e1 + e2.C)$
$f = -f2.C$
$kp = 1 + (kp0 - 1).V/3000$, and
a, b1, b2, c1, c2, d1, d2, e1, e2, f2, and kp0 are constant coefficients;
$\Delta t$ designates the time interval between said instant ($t_n$) and the preceding instant ($t_{n-1}$) in the succession;
V designates the speed of rotation of the rotor assembly (2);
C designates the power feed setting applied to the excitation means (9) and is equal to the number of windings (3) that are powered;
Ts designates the inductor winding temperature; and
$Tr_n$ and $Tr_{n-1}$ designate the armature temperature respectively at said instant ($t_n$) and at the preceding instant ($t_{n-1}$) in the succession.

9. Equipment according to any one of claims 4 to 8, characterized in that it comprises a control member (18) having a plurality of positions and control means (12) for establishing the power feed setting (C) as a function in particular of the position (P) of the control member (18), and in that the control means (12) are arranged to modify automatically the power feed setting (C) applied to the excitation means (9) whenever the armature temperature ($Tr_n$) evaluated by the processor means (13) exceeds a predetermined threshold (Tmax) in such a manner that the excitation means (9) then connect the electricity source (8) to a number of inductor windings (3) that is smaller than the number which corresponds to the position (P) of the control member (18).

10. Equipment according to any one of claims 1 to 9, characterized in that the processor means (13) are arranged to estimate a value X for the braking torque by the following formula:

$$X = C.V^{\alpha}(K0 + K1.V + K2.Tr + K3.Ts + K4.V.Tr$$

$$+ K5.V.Ts + K6.Tr.Ts + K7.V^2 + K8.Tr^2)$$

in which:

$\alpha$, K0, K1, K2, K3, K4, K5, K6, K7, and K8 are constant coefficients;
C designates the value of the power feed setting taken into consideration;
V designates the speed of rotation of the rotor assembly (2); and
Tr and Ts respectively designate the temperatures of the armature (6) and of the inductor windings (3).

FIG.1.

Tr(°C)

FIG.2.

T max

B

A

0

t

EP 0 660 502 B1

# FIG.3.

# FIG.4.

13